Europäisches Patentamt

European Patent Office

Office européen des brevets

(11) Veröffentlichungsnummer: **0 156 274**
**B1**

(12) **EUROPÄISCHE PATENTSCHRIFT**

(45) Veröffentlichungstag der Patentschrift: **22.11.90**

(51) Int. Cl.⁵: **C 10 M 173/02** // C10N40:00

(21) Anmeldenummer: **85103084.1**

(22) Anmeldetag: **16.03.85**

(54) **Wässrige Trennmittel.**

(30) Priorität: **24.03.84 DE 3410957**

(43) Veröffentlichungstag der Anmeldung:
**02.10.85 Patentblatt 85/40**

(45) Bekanntmachung des Hinweises auf die
Patenterteilung:
**22.11.90 Patentblatt 90/47**

(84) Benannte Vertragsstaaten:
**AT BE CH DE FR GB IT LI LU NL SE**

(56) Entgegenhaltungen:
**DE-A-2 350 421**
**US-A-3 946 135**
**US-A-3 971 863**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **Gardenier, Karl-Josef
Boschstrasse 99
D-4000 Düsseldorf 19 (DE)**
Erfinder: **Heimbürger, Wolfgang
Capitostrasse 14
D-4000 Düsseldorf 13 (DE)**

**Die Akte enthält technische Angaben, die nach
dem Eingang der Anmeldung eingereicht
wurden und die nicht in dieser Patentschrift
enthalten sind.**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

## Beschreibung

Die vorliegende Erfindung bezieht sich auf ein Verfahren zur temporär oberflächlichen antiadhäsiven Ausrüstung mit Trennmitteln sowie den Einsatz bei der Herstellung von Schmelzklebstoffen, insbesondere von Haftschmelzklebstoffen.

Schmelzklebstoffe, auch kurz Hotmelts genannt, werden zum Kleben auf den verschiedensten Gebieten der Technik verwendet. Unter den Schmelzklebstoffen nehmen die Haftschemlzklebstoffe, d.h. solche mit einer Dauerklebrigkeit einen besonderen Raum ein. Aufgrund dieser speziellen Eigenschaft, auch bei Raumtemperatur noch klebrig zu sein, verursachen sie bei der Verarbeitung besondere Schwierigkeiten.

Für die Herstellung von Heißschmelzklebstoffen und deren Konfektionierung ist eine besondere Technik entwickelt worden (vg. Zeitschrift "Seifen, Öle, Fette, Wachse" (1976) S. 279 bis 282). Nach dem Aufschmelzen der für den Klebstoff benötigten Rohstoffe wird dieser granuliert. Beispielsweise kann man so verfahren, daß eine heiße Schmelz in Form von Bändern auf ein gekühltes, gegebenenfalls mit einem Wasserfilm versehenes Stahlband aufgetragen wird. Nachdem der Klebstoff hinreichend abgekühlt ist, wird er in einem Messerwerk zerkleinert. Diesen Vorgang kann man in Gegenwart von wäßrigen Trennmitteln wie Lösungen von anionaktiven Netzmitteln oder wasserlöslichen Seifen durchführen. Auch kann es erforderlich sein, noch ein Bepudern der Granalien mit Talkum oder dergleichen vorzunehmen. Weiter ist es aus US—A—3 971 863 bekannt bzw. Granulate aus nicht ausgehärtetem für das Spritzgießen bestimmten Phenolformal dehydharzen mit Metallsalzen langkettiger Fettsäure und gegebenenfalls mit Polyglykolen oder Polyglykolestern bzw. -ethern zu behandeln. Insbesondere die zuletztgenannten Verbindungen werden dann bei der Durchhärtung in den geformten Duroplasten chemisch eingebaut.

Ferner ist es aus DE—A—2 350 421 speziell zur Behandlung von Chloroprenkautschuk bekannt, diesen in feinverteilter Form, beispielsweise in Plättchen-, Pulver- oder Krümelform mit wäßrigen Trennmitteln, bestehend aus aliphatischen Polyhydroxyverbindungen z.B. Glycerin, Glykol, Polyaklylenglykol zu behandeln. Auch hierbei handelt es sich um ein Rohmaterial, welches als solches noch nicht fertig ist, sondern erst in Mischung mit weiteren bestimmten Komponenten verarbeitet wird, einer oberflächlichen Veränderung unterworfen wird. Darauf kann sich der Rohstoffverarbeiter bei seiner Konfektionierung bzw. weiteren chemischen Umsetzung leicht einstellen.

Die für viele Anwendungszwecke erfolgreich einsetzbaren Schmelzklebstoffe, insbesondere die dauerklebrigen Schmelzklebstoffe konnte man bisher nicht in Granulate oder Pastillen überführen. Einmal befürchtete man insbesondere bei den letzter genannten dauerklebrigen Klebstoffen ein rasches Unwirksamwerden der aufgebrachten an sich bekannten Trennmittel bzw. ganz allgemein bei Schmelzklebstoffen eine Migration der Trennmittel ähnlich der sogenannten Weichmacherwanderung in thermoplastischen Kunststoffen. Ein derartiger Vorgang führt einmal zur Veränderung des Klebstoffs selbst und bewirkt außerdem ein Zusammenbacken der Granulate. Das Problem wird dadurch deutlich, daß man sogar Versuche unternommen hat, die dauerklebrigen Schmelzklebstoffe mit einer Schicht eines nicht dauerklebrigen Klebstoffs zu überziehen und so doch noch nach Zerschneiden zu pastillenartigen Formen zu gelangen. Hierzu ist jedoch eine aufwendige technische Ausrüstung erforderlich. So werden auch in der Technik nach wie vor die dauerklebrigen Schmelzklebstoffe in mit Trennmitteln beschichteten Kartons abgefüllt und bis zur eigentlichen Anwendung. d.h. zum Aufschmelzen darin belassen.

Aufgabe der vorliegenden Erfindung war es daher, ein Verfahren zur oberflächlichen Ausrüstung von klebrigen, insbesondere dauerklebrigen Schmelzklebstoffen zu finden, die an den fertigen Granulaten, Pastillen, Würfeln oder Flakes durchgeführt werden soll und die vorstehend erwähnten Nachteile bzw. das aufwendige Verfahren des Abfüllens in Kartons und so weiter überflüssig macht.

Eine weitere Aufgabe bestand darin, daß der Überzug aus Trennmitteln in solch geringer Menge auf den Oberflächen ist, daß nach dem Aufschmelzen keine unerwünschte Veränderung der charakteristischen Eigenschaften des aufgetragenen Klebstoffs erfolgt. Das fertige Produkt aud Granulat, Pastillen, Würfeln oder Flakes soll nicht zusammenbacken, so daß eine gute Lagerfähigkeit auch bei leicht erhöhter Temperatur gegeben ist. Ferner sollten die Trennmittel in sehr geringer Menge wirksam werden.

Erfindungsgemäß wird diese Aufgabe gelöst durch ein Verfahren zur temporär oberflächlichen antiadhäsiven Ausrüstung von Schmelzklebstoffen in der vorstehend erwähnten Formgestaltung mit einer wäßrigen 0,5 bis 25, insbesondere 5 bis 20 gewichtsprozentigen Lösung eines mindestens bifunktionellen aliphatischen Alkohols mit 3 bis 7 Kohlenstoffatomen und/oder einer mindestens trifunktionellen aliphatischen Hydroxycarbonsäure bzw. deren wasserlösliche Salze.

Bevorzugte Vertreter der wenigstens bifunktionellen Alkohole sind Mannit und Trimethylalkane mit 2 bis 4 Kohlenstoffatomen im Alkangerüst (Trimethylolethan, -propan, -butan) sowie Tetramethylolmethan (Pentaerythrit) und für die Hydroxycarbonsäuren die Dihydroxybernsteinsäure (Weinsäure) sowie die Citronensäure, bzw. die wasserlöslichen Salze dieser Säuren, insbesondere die gut wasserlöslichen Alkali-bzw. Ammoniumsalze. Auch Glycerin oder Ethylenglykol oder Propylenglykol können zwar mitverwendet werden, zeigen aber im allgemeinen keine ausreichende Wirkung, falls nicht weitere im folgenden erwähnten Zusätze erfolgen.

Man kann die Wirksamkeit des erfindungsgemäßen Verfahrens noch dadurch verbessern, daß man ihnen zusätlich noch 0,2 bis 15 Gew.-%, bezogen auf die gesamte Trennmittellösung, selbst an wasserunlöslichen Salzen einer $C_{12}$- bis $C_{36}$-aliphatischen und/oder alicyclischen Mono- oder Dicarbonsäure zusetzt. Als wasserunlösliche Salze kommen hier insbesondere die des Calciums, Bariums, Zinks oder Aluminiums in Frage. Nach einer bevorzugten Ausführungsform enthalten die erfindungsgemäßen wäßrigen Trennmittel noch 0,5 bis 10 Gew.-% (bezogen auf die Lösung) and Calcium- und/oder Aluminium- salz einer $C_{14}$- bis $C_{22}$-Fettsäure.

Das erfindungsgemäß Verfahren ist besonders wirtschaftlich, weil die relativ verdünnten wäßrigen Lösung bzw. Suspensionen während des Verfahrens umgepumpt werden und sich auf den gebildeten Granulaten bzw. Pastillen nur äußerst geringe Mengen der Wirksubstanz niederschlagen. Diese liegen im Bereich von etwa 1 bis $10^0/_{00}$, bezogen auf den Schmelzklebstoff. Im allgemeinen wird nur etwa 0.2 bis $0,6^0/_{00}$ auf der Oberfläche des Haftschmelsklebstoffs angelagert Selbstverständlich sind diese Mengen etwas von der Größe der Pastillen bzw. Granulate und auch von den eingesetzten Haftschmelzklebstoffen abhängig.

Es hat sich überraschenderweise gezeigt, daß die zusätzlich verwendungbaren Salze von $C_{12}$-$C_{36}$-Mono- bzw. Dicarbonsäuren allein keine dauernde abweisende Beschichtung erzeugen können. Mit diesen schwerlöslichen Salzen erzeugte Ablagerungen werden nach einer gewissen Zeit bei Raumtemperatur unwirksam, so daß später ein Zusammenhaften der Teilchen stattfindet.

Das erfindungsgemäß Verfahren findet bevorzugt Verwendung bei der Herstellung von Schmelzklebstoffen, insbesondere von Haftschmelzklebstoffen, die sich durch eine starke Oberflächenklebrigkeit auszeichnen. Derartige haftklebrige Schmelzklebstoffe sind seit längerem bekannt und beispielsweise in der Monographie von D. L. Baterman "Hot Melt Adhesives", 3. Ausgabe (1978), S. 301 bis 346 sowie zahlreichen weiteren Veröffentlichungen, insbesondere in der Patentliteratur beschrieben. Vielfach gebräuchliche Zusammensetzungen basieren auf Blockpolymerisaten, bei denen auf einem elastomeren Mittelblock Polystyrolblocke aufpolymerisiert sind. Derartige Polymere sind handelsüblich und werden zusammen mit klebrig machenden Harzen und weiteren Hilfsmitteln verarbeitet. Auch können elastomere Ethylenvinylacetatpolymerisate als Basis für dauerkleibrige Schmelzkleber dienen.

Bei der Verarbeitung auf den bekannten Maschinen zur Herstellung von Schmelzklebstoff, Granulaten bzw. Pastillen wird auch bei Einsatz der unterschiedlichsten Klebrohstoffe auf dem erhaltenen Material eine inerte Beschichtung erhalten, die praktisch keine Veränderung der anwendungstechnischen Eigenschaften des Schmelzklebers bzw. Haftschmelzklebstoffs bedingt.

Da die Erfindung er ermöglicht, Haftschmelzklebstoffe im schüttfähigen Zustand bereitzustellen, iste die Verarbeitung der in dieser Form vorliegenden Klebstoffe wesentlich vereinfacht. Die unter den erfindungsgemäßen Trennmitteln ausgerüsteten Schmelzklebstoffe, insbesondere Haftschmelzklebstoffe, lassen sich in üblicher Weise in den dafür vorgesehenen Geräten weiterverabeiten.

**Patentansprüche**

1. Verfahren zur temporär oberflächlichen antiadhäsiven Ausrüstung von klebrigen Pastillen, Granulaten, Würfeln, Flakes und dergleichen, dadurch gekennzeichnet, daß man Schmelzklebstoffe in dieser Formengestaltung mit einer wäßrigen 0,5 bis 25, insbesondere 5 bis 20 gewichtsprozentigen Lösung eines mindestens bifunktionellen aliphatischen Alkohols mit 3 bis 7 Kohlenstoffatomen und/oder mindestens trifunktionellen aliphatischen Hydroxycarbonsäure bzw. deren wasserlösliche Salze behandelt.

2. Verfahren nach Anspruch 1, dadurch gekennzeichnet, daß die wäßrige Lösung als mindestens bifunktionelle Alkohole Trimethylolalkane mit 2 bis 4 Kohlenstoffatomen im Alkangerüst und/oder Tetramethylolmethan und/oder Mannit und/oder Dihydroxybernsteinsäure und/oder Citronensäure bzw. deren wasserlösliche Salze enthält.

3. Verfahren nach Ansprüchen 1 und 2, dadurch gekennzeichnet, daß zusätlich, bezogen auf die Trennmittellösung, noch 0,2 bis 15 Gew.-% an wasserunlöslichem Salz einer $C_{12}$- bis $C_{36}$-aliphatischen oder alicyclischen Mono- oder Dicarbonsäure in Suspension vorhanden sind.

4. Verfahren nach Ansprüchen 1 bis 3, dadurch gekennzeichnet, daß zusätzlich, bezogen auf die Trennmittellösung, als wasserunlösliche Salze einer aliphatischen Monocarbonsäure 0,5 bis 10 Gew.-% an Calcium- und/oder Aluminiumsalz einer $C_{14}$- bis $C_{22}$-Fettsäure in Suspension vorhanden sind.

5. Verfahren zur antiadhäsiven Ausrüstung nach den Ansprüchen 1 bis 4 bei der Herstellung von Haftschmelzklebstoffen.

6. Verfahren zur antiadhäsiven Ausrüstung nach Ansprüchen 1 bis 5 zur antiadhäsiven Ausrüstung von Schmelzklebstoffen, insbesondere von Haftschmelzklebstoffen, in Form von Granulaten.

**Revendications**

1. Procédé d'enduction antiadhésive temporaire de la surface de pastilles, granulés, dés, flocons et autres formes similaires, caractérisé en ce que l'on traite des colles thermofusibles présentant cette conformation par une solution aqueuse à 0,5 à 25, en particulier à 5 à 20 pour cent en poids, d'un alcool aliphatique au moins bifonctionnel, comportant 3 à 7 atomes de carbone et/ou d'un acide hydroxycarboxylique aliphatique au moins trifonctionnel au de ses sels solubles dans l'eau.

2. Procédé selon la revendication 1, caractérisé en ce que la solution aqueuse renferme comme alcools au moins bifonctionnels des triméthylolal- canes comportant 2 à 4 atomes de carbone dans le squelette alcane et/ou du tétraméthylolméthane et/ou du mannitol et/ou de l'acide dihydroxysuccinique et/ou de l'acide citrique ou les sels solubles dans l'eau desdits acides.

3. Procédé selon les revendications 1 et 2, caractérisé en ce que sont présents en plus 0,2 à 15% en poids (par rapport à la quantité totale de la solution d'agent de séparation) de sel insoluble dans l'eau d'un acide mono- ou dicarboxylique alicyclique ou aliphatique de $C_{12}$ à $C_{36}$ en suspension.

4. Procédé selon les revendications 1 à 3, caractérisé en ce sont présents en plus, comme sels insolubles dans l'eau d'un acide monocarboxylique aliphatique, 0,5 à 10% en poids (par rapport à la quantité totale de la solution d'agent de séparation) d'un sel de calcium et/ou d'aluminium d'un acide gras de $C_{14}$ à $C_{22}$ en suspension.

5. Procédé d'enduction antiadhésive selon les revendications 1 à 4, pour la fabrication de colles thermofusibles auto-adhésives.

6. Procédé d'enduction antiadhésive selon les revendications 1 à 5 pour l'enduction antiadhésive de colles thermofusibles, en particulier de colles thermofusibles auto-adhésives sous le forme de granulés.

**Claims**

1. A process for the temporary, anti-adhesive surface finishing of tacky pellets, granules, cubes, flakes and the like, characterized in that hotmelt adhesives in that form are treated with an aqueous 0.5 to 25% by weight and, more particularly, 5 to 20% by weight solution of an at least dihydric aliphatic alcohol containing from 3 to 7 carbon atoms and/or of at least one tribasic aliphatic hydroxycarboxylic acid or water-soluble salts thereof.

2. A process as claimed in claim 1, characterized in that the aqueous solution contains as the at least dihydric alcohols trimethylol alkanes containing from 2 to 4 carbon atoms in the alkane skeleton and/or tetramethylol methane and/or mannitol and/or dihydroxy succinic acid and/or citric acid or water-soluble salts thereof.

3. A process as claimed in claims 1 and 2, characterized in that 0.2 to 15% by weight, based on the release agent solution, of a water-insoluble salt of a $C_{12-36}$ aliphatic or alicyclic mono- or dicarboxylic acid is additionally present in suspension.

4. A process as claimed in claims 1 to 3, characterized in that 0.5 to 10% by weight, based on the release agent solution, of the calcium and/or aluminium salt of a $C_{14-22}$ fatty acid is additionally present in suspension as the water-soluble salt of an aliphatic monocarboxylic acid.

5. A process for anti-adhesive finishing as claimed in claims 1 to 4 in the production of hotmelt adhesives.

6. An anti-adhesive finishing process as claimed in claims 1 to 5 for the anti-adhesive finishing of hotmelt adhesives, more particularly pressure-sensitive hotmelts, in the form of granules.